# EUROPÄISCHE PATENTANMELDUNG

(11) **EP 4 491 368 A1**
(43) Veröffentlichungstag der Anmeldung: **15.01.2025**
(21) Anmeldenummer: 23185704.6
(22) Anmeldetag: 14.07.2023
(51) Int. Cl.: B29C 48/265

(54) **EXTRUSIONSVORRICHTUNG UND UNTERGESTELL**

(71) Anmelder: Coperion GmbH, 70469 Stuttgart (DE)
(72) Erfinder: Sommer, Daniel, 70437 Stuttgart (DE)
(74) Vertreter: Ege Lee & Roider Patentanwälte

(57) **Zusammenfassung**

Extrusionsvorrichtung (116, 154) mit zumindest einer Schneckenmaschine (118, 130) zum Verarbeiten von Material, insbesondere Kunststoffmaterial, einem Untergestell (126) auf dem die zumindest eine Schneckenmaschine (118, 130) montiert ist und zumindest einem Dosiergestell (100, 138) zum Positionieren einer Dosiereinrichtung (102) relativ zur zumindest einen Schneckenmaschine (118, 130), wobei das zumindest eine Dosiergestell (100, 138) an dem Untergestell (126) montiert ist, sowie Untergestell (126) auf dem zumindest eine Schneckenmaschine (118, 130) montierbar ist, wobei zumindest ein Dosiergestell (100, 138) zum Positionieren einer Dosiereinrichtung (102) relativ zum Untergestell (126) und/oder relativ zur zumindest einen Schneckenmaschine (118, 130) an dem Untergestell (126) montiert ist.

## Beschreibung

Die Erfindung betrifft eine Extrusionsvorrichtung mit zumindest einer Schneckenmaschine zum Verarbeiten von Material, insbesondere Kunststoffmaterial, und zumindest einem Dosiergestell für eine Dosiereinrichtung. Außerdem betrifft die Erfindung ein Untergestell auf dem zumindest eine Schneckenmaschine montierbar ist.

Extrusionsvorrichtungen weisen häufig ein oder mehrere Dosiereinrichtungen auf, die zum Zuführen und/oder Dosieren von zu verarbeitenden Material oder von zuzumischenden Zusatzstoffen in die Schneckenmaschine dienen. Üblicherweise sind die Dosiereinrichtungen in einem Bereich angeordnet, der oberhalb der Schneckenmaschine liegt. Dabei sind unterschiedliche Ausführungen bekannt. Zum Beispiel können Dosiereinrichtungen vertikal stehend oben am Zylindergehäuse der Schneckenmaschine befestigt sein. Ferner können Dosiereinrichtungen an einem Tragarm montiert sein, der vertikal oberhalb der Schneckenmaschine an der Gebäudedecke oder an einem Raumtragwerk befestigt ist. Solche Anordnungen sind beispielsweise aus der DE 10 2004 040 185 A1 und DE 20 2007 014 877 U1 bekannt.

Nachteilig ist, dass bei derartigen Anordnungen ein erhöhter Raumbedarf nötig ist, um die Tragkonstruktionen überhaupt bereitstellen zu können. Ferner bieten die bekannten Anordnungen keine gute Zugänglichkeit zu der Schneckenmaschine. Auch wirken sich die großen Fallhöhen zwischen Dosierung und Schneckenmaschine negativ aus.

Der Erfindung liegt die Aufgabe zugrunde, eine eingangs genannte Extrusionsvorrichtung strukturell und/oder funktionell zu verbessern. Außerdem liegt der Erfindung die Aufgabe zugrunde, ein eingangs genanntes Untergestell oder Dosiergestell strukturell und/oder funktionell zu verbessern.

Beispielsweise ist es eine Aufgabe der vorliegenden Erfindung, eine Extrusionsvorrichtung und ein Untergestell mit Dosiergestell bereitzustellen, welches die im Zusammenhang mit dem Stand der Technik aufgezeigten Probleme reduzieren bzw. beseitigen kann. Insbesondere ist es eine Aufgabe der vorliegenden Erfindung, den Raumbedarf und/oder die Fallhöhe signifikant zu reduzieren. Trotzdem soll eine gute Zugänglichkeit zu den Bauteilen der Schneckenmaschine, beispielsweise von oben, ermöglicht werden.

Die Aufgabe wird gelöst mit einer Extrusionsvorrichtung mit den Merkmalen des Anspruchs 1. Außerdem wird die Aufgabe gelöst mit einem Untergestell mit den Merkmalen des Anspruchs 13. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie weitergebildet und/oder kombiniert sein. Ebenso können nachfolgend beschriebene Merkmale der Extrusionsvorrichtung und des Untergestells miteinander kombiniert und/oder weitergebildet werden.

Ein Aspekt betrifft eine Extrusionsvorrichtung. Die Extrusionsvorrichtung weist zumindest eine Schneckenmaschine auf. Die Schneckenmaschine kann zum Verarbeiten von Material, insbesondere Kunststoffmaterial, ausgebildet sein. Beispielsweise kann die Schneckenmaschine zum Plastifizieren und/oder Mischen und/oder Homogenisieren von Material, wie Kunststoffmaterial, ausgebildet sein. Die Schneckenmaschine kann ein Gehäuse aufweisen, beispielsweise ein Zylindergehäuse. Ferner kann die Schneckenmaschine zumindest eine in dem Gehäuse gelagerte Behandlungselement-Welle zum Plastifizieren und/oder Mischen und/oder Homogenisieren des zugeführten Materials aufweisen. Die zumindest eine Behandlungselement-Welle kann zum Plastifizieren und/oder Mischen und/oder Homogenisieren des Materials ausgebildet sein. Die Schneckenmaschine und/oder dessen zumindest eine Behandlungselement-Welle kann von einem Antriebsmotor über ein Getriebe drehantreibbar sein.

Die Schneckenmaschine kann eine Einwellenschneckenmaschine oder eine Mehrwellenschneckenmaschine sein. Die Einwellenschneckenmaschine kann ein Einschneckenextruder sein. Die Mehrwellenschneckenmaschine kann als gleichsinnig oder gegensinnig drehangetriebene und/oder dicht kämmende MehrwellenSchneckenmaschine ausgebildet sein. Vorzugsweise kann die Mehrwellenschneckenmaschine als eine Zweiwellen-Schneckenmaschine ausgebildet sein. Die Mehrwellenschneckenmaschine kann insbesondere ein Doppelschneckenextruder sein. Somit kann die Mehrwellenschneckenmaschine zumindest zwei in dem Gehäuse gelagerte Behandlungselement-Wellen zum Plastifizieren und/oder Mischen und/oder Homogenisieren des zugeführten Materials umfassen. Die zumindest zwei Behandlungselement-Wellen können zum Plastifizieren und/oder Mischen und/oder Homogenisieren des zugeführten Materials ausgebildet sein. Die zumindest zwei Behandlungselement-Wellen können Extruderschnecken sein. Die zumindest zwei Behandlungselement-Wellen können in dem Gehäuse aufgenommen und/oder drehbar gelagert sein.

Zum Zuführen des Materials oder von zuzumischenden Zusatzstoffen in die Schneckenmaschine kann die Schneckenmaschine zumindest eine Zuführöffnung aufweisen. Beispielsweise kann die Zuführöffnung in einer Einzugszone der Schneckenmaschine vorgesehen sein. In diesem Fall kann die Zuführöffnung eine Haupt-Zuführöffnung, z.B. Haupt-Einlauf, der Schneckenmaschine sein. In einer Variante kann die Schneckenmaschine, beispielsweise in einer Zuführzone, zumindest eine Zuführöffnung zum Zuführen eines Zusatzstoffes aufweisen. Der Zusatzstoff kann ein Additiv, Hilfsstoff, Füllstoff, Talkum, Stabilisator, Modifier, Schlagzähmodifier, Antioxidant, Farbstoff oder Wasser sein oder umfassen. Beispielsweise kann der Zusatzstoff pulverförmig, granulatförmig, faserförmig oder flüssig sein. Durch Zugabe zumindest eines Zusatzstoffes können die Eigenschaften, z.B. Kunststoffeigenschaften und/oder die Kunststoffstruktur, des zu verarbeitenden Materials, wie Kunststoffmaterials, gezielt verändert und/oder eingestellt werden.

Zum Zuführen des Materials und/oder Zusatzstoffes in die Schneckenmaschine kann zumindest eine Dosiereinrichtung vorgesehen sein. Die Extrusionsvorrichtung kann daher zumindest eine Dosiereinrichtung aufweisen. Die zumindest eine Dosiereinrichtung kann zum Dosieren des von der zumindest einen Schneckenmaschine zu verarbeitenden Materials und/oder Zusatzstoffs ausgebildet sein. Die zumindest eine Dosiereinrichtung kann mit der Zuführöffnung gekoppelt und/oder mit dieser verbunden und/oder dieser zugeordnet sein, insbesondere so, dass das zuzuführende Material oder Zusatzstoff über die Zuführöffnung in die Schneckenmaschine gelangen kann. Die zumindest eine Dosiereinrichtung kann zum dosierten und/oder kontinuierlichen Zuführen des Materials und/oder des Zusatzstoffes in die Schneckenmaschine dienen bzw. ausgebildet sein. Alternativ kann die zumindest eine Dosiereinrichtung zum diskontinuierlichen Zuführen des Materials und/oder des Zusatzstoffes in die Schneckenmaschine dienen bzw. ausgebildet sein.

Die zumindest eine Dosiereinrichtung kann zum Aufnehmen des Materials und/oder Zusatzstoffes ausgebildet sein. Hierzu kann die zumindest eine Dosiereinrichtung zumindest einen Trichter, wie Einfülltrichter, aufweisen. Über den zumindest einen Trichter kann das Material und/oder der Zusatzstoff bevorratet und/oder der Dosiereinrichtung zugeführt werden. Die zumindest eine Dosiereinrichtung kann einen Vorrats- oder Aufbewahrungsbehälter aufweisen. Beispielsweise kann der zumindest eine Trichter den Vorrats- oder Aufbewahrungsbehälter bilden oder Teil davon sein. Die zumindest eine Dosiereinrichtung kann dazu ausgebildet sein, der Schneckenmaschine das Material und/oder den Zusatzstoff gravimetrisch oder volumetrisch dosiert und/oder kontinuierlich zuzuführen. In einer Variante kann die zumindest eine Dosiereinrichtung eine gravimetrische oder volumetrische Dosiereinheit, wie Dosierwaage, aufweisen. Die Dosiereinheit kann eine Bandwaage sein. Die Dosiereinheit kann gravimetrisch oder volumetrisch betrieben sein. Die zumindest eine Dosiereinrichtung und/oder die Dosiereinheit kann dazu ausgebildet sein, den Stoffstrom, das Volumen und/oder das Gewicht zumindest eines Teils des Materials und/oder des Zusatzstoffes, insbesondere exakt, zu erfassen.

In einer weiteren Variante kann die zumindest eine Dosiereinrichtung ausgebildet sein, das Material oder den Zusatzstoff einer Zuführschneckenmaschine und/oder Dosierschneckenmaschine zuzuführen. Die Zuführschneckenmaschine kann mit der Schneckenmaschine derart verbunden sein, dass das Material oder der Zusatzstoff in die Schneckenmaschine geführt wird. Die Zuführschneckenmaschine kann eine ein- oder zweiwellige Seitenbeschickungsschneckenmaschine sein.

An der Schneckenmaschine kann eine Austragsöffnung zum Austragen des plastifizierten und/oder gemischten und/oder homogenisierten Materials vorgesehen sein. Beispielsweise kann an der Austragsöffnung ein Extrusionswerkzeug, ein Strangkopfwerkzeug oder eine Düsenvorrichtung angeschlossen sein.

Die Extrusionsvorrichtung weist ferner ein Untergestell auf. Das Untergestell kann ein Maschinenuntergestell sein. Auf dem Untergestell kann die zumindest eine Schneckenmaschine und/oder dessen Gehäuse bzw. Zylindergehäuse montiert und/oder befestigt sein. Dabei kann die Schneckenmaschine und/oder dessen Gehäuse bzw. Zylindergehäuse beispielsweise über Stützen an dem Untergestell, insbesondere an der Oberseite des Untergestells, abgestützt sein. Ferner kann der Antriebsmotor und/oder das Getriebe der Schneckenmaschine auf dem Untergestell, beispielsweise auf der Oberseite des Untergestells, montiert und/oder befestigt sein.

Des Weiteren weist die Extrusionsvorrichtung zumindest ein Dosiergestell auf. Das zumindest eine Dosiergestell ist zum Positionieren einer Dosiereinrichtung relativ zur zumindest einen Schneckenmaschine und/oder relativ zum Untergestell ausgebildet. Die Dosiereinrichtung kann an dem zumindest einen Dosiergestell angebracht und/oder an diesem montiert sein.

Das zumindest eine Dosiergestell ist an dem Untergestell montiert und/oder daran befestigt. In einer bevorzugten Variante kann das zumindest eine Dosiergestell seitlich am Untergestell montiert sein. Beispielsweise kann das zumindest eine Dosiergestell in Längsrichtung des Untergestells und/oder in Längsrichtung der Schneckenmaschine gesehen an der linken oder rechten Seite des Untergestells montiert sein.

In einer Variante können zwei Dosiergestelle vorgesehen sein. Die beiden Dosiergestelle können an gegenüberliegenden Seiten des Untergestells montiert sein. Beispielsweise kann ein erstes Dosiergestell in Längsrichtung des Untergestells und/oder in Längsrichtung der Schneckenmaschine gesehen an der linken Seite des Untergestells und ein zweites Dosiergestell in Längsrichtung des Untergestells und/oder in Längsrichtung der Schneckenmaschine gesehen an der rechten Seite des Untergestells montiert sein. Die beiden Dosiergestelle können im Wesentlichen identisch ausgebildet sein.

Das zumindest eine Dosiergestell kann in Längsrichtung oder Querrichtung der zumindest einen Schneckenmaschine und/oder in Längsrichtung des Untergestells verfahrbar sein. Hierzu kann zumindest eine ein- oder mehrachsige Linearführung vorgesehen sein. Mittels der Linearführung kann das zumindest eine Dosiergestell an dem Untergestell angeordnet und/oder, beispielsweise linear, verfahrbar sein. Durch die Linearführung kann daher auch die zumindest eine Dosiereinrichtung linear verfahrbar sein. Beispielsweise kann das zumindest eine Dosiergestell über die zumindest eine Linearführung an dem Untergestell montiert sein. Das zumindest eine Dosiergestell und/oder die Dosiereinrichtung kann manuell, halbautomatisch oder automatisch positioniert und/oder verfahren werden. Die zumindest eine Linearführung kann zum manuellen, halbautomatischen oder automatischen Verfahren des Dosiergestells und/oder der Dosiereinrichtung ausgebildet sein, beispielsweise elektrisch, pneumatisch oder hydraulisch. Die Linearführung kann zumindest eine Schiene, z.B. Laufschiene und/oder Führungsschiene, aufweisen. Beispielsweise können zwei Schienen vorgesehen sein, die zum Beispiel voneinander, insbesondere vertikal, beabstandet sind. Ferner kann die Linearführung zumindest eine Achse, z.B. Laufachse und/oder Linearachse, aufweisen. Die zumindest eine Achse kann mit der zumindest einen Schiene derart gekoppelt sein, dass die Achse entlang und/oder im Wesentlichen innerhalb der Schiene verschiebbar ist. Beispielsweise kann die zumindest eine Linearführung ein oder mehrere Linearachsen aufweisen, entlang derer ein Verfahren möglich ist. In einer Variante kann die Linearführung als Teleskopauszug und/oder Linearauszug ausgebildet sein oder einen solchen aufweisen. Die zumindest eine Schiene kann an dem Untergestell oder an dem Dosiergestell angebracht, z.B. befestigt, sein. Alternativ kann die zumindest eine Achse an dem Untergestell oder an dem Dosiergestell angebracht, z.B. befestigt, sein. Die ein oder mehreren Linearachsen können elektronische Servoachsen sein. Zusätzlich oder alternativ kann die Linearführung zumindest einen Läufer aufweisen. Der zumindest eine Läufer kann mit der zumindest einen Schiene derart gekoppelt sein, dass der zumindest eine Läufer entlang und/oder im Wesentlichen innerhalb der Schiene verschiebbar ist. Es können auch zwei oder mehr Läufer mit einer Schiene gekoppelt sein, insbesondere so, dass die zwei oder mehr Läufer entlang und/oder im Wesentlichen innerhalb einer gemeinsamen Schiene jeweils einzeln und/oder zusammen verschiebbar sind. Der zumindest eine Läufer kann an dem Dosiergestell oder an dem Untergestell angebracht, z.B. befestigt, sein. In eine Variante können so zwei, drei, vier oder mehr Dosiergestelle mit jeweils einer Dosiereinrichtung mittels einer gemeinsamen Linearführung entlang zumindest einer gemeinsamen Führungsschiene linear verfahren werden. Dabei können die Dosiereinrichtungen verschiedenen Einlauftrichtern oder dem gleichen Einlauftrichter zugeordnet sein und in diese/n dosieren. Die Linearführung kann feststellbar bzw. arretierbar sein. Beispielsweise kann die zumindest eine Achse oder der zumindest eine Läufer feststellbar bzw. arretierbar sein. Hierzu kann zumindest eine Befestigungseinrichtung, zum Beispiel ein Kniehebelmechanismus, vorgesehen sein. Für jede Achse und/oder für jeden Läufer kann eine Befestigungseinrichtung vorgesehen sein. Die zumindest eine Befestigungseinrichtung kann ausgebildet sein, die Achse oder den Läufer festzustellen bzw. zu arretieren, beispielsweise an die zugehörige Schiene. Es kann eine Steuerung für die Linearführung und/oder dessen Achsen und/oder dessen Läufer vorgesehen sein, die eingerichtet ist, eine Betätigung der Linearführung und/oder deren Achsen und/oder des zumindest einen Läufers zu veranlassen oder durchzuführen. Dadurch kann ein lineares Verfahren des Dosiergestells und/oder der Dosiereinrichtung erfolgen. Ferner kann die Linearführung zumindest einen Aktuator aufweisen. Der zumindest eine Aktuator kann an dem Untergestell oder an dem Dosiergestell angebracht, z.B. befestigt, sein. Der zumindest eine Aktuator kann eine Linearbewegung ermöglichen und/oder zur Durchführung einer Linearbewegung ausgebildet sein. Damit kann eine Linearbewegung zwischen dem Dosiergestell und dem Untergestell erfolgen bzw. eine Linearbewegung des Dosiergestells und/oder der Dosiereinrichtung relativ zum Untergestell erfolgen. Der Aktuator kann ein Linearaktuator sein, beispielsweise ein elektrischer, pneumatischer oder hydraulischer Linearaktuator. Der Aktuator kann eine Zylinder-Kolben-Anordnung, eine Spindelanordnung oder einen Spindelantrieb umfassen. Zusätzlich oder alternativ kann die Linearführung einen Griff zum manuellen Verschieben, z.B. durch einen Bediener, aufweisen. Der Griff an dem Dosiergestell angebracht sein.

Das zumindest eine Dosiergestell kann eine Verstelleinrichtung zum Positionieren der Dosiereinrichtung relativ zur zumindest einen Schneckenmaschine und/oder relativ zum Untergestell aufweisen. Beispielsweise kann die Verstelleinrichtung zum Verschwenken und/oder Einstellen einer Höhe der Dosiereinrichtung, insbesondere relativ zur zumindest einen Schneckenmaschine und/oder relativ zum Untergestell, ausgebildet sein.

Die Verstelleinrichtung kann einen Schwenkmechanismus aufweisen. Mittels des Schwenkmechanismus kann die Dosiereinrichtung um eine Vertikaldrehachse, beispielsweise in eine Dosierposition und/oder Reinigungsposition, schwenkbar oder verdrehbar sein. Der Schwenkmechanismus kann manuell, halbautomatisch oder automatisch betätigbar ausgebildet sein, beispielsweise elektrisch, pneumatisch oder hydraulisch. Ferner kann der Schwenkmechanismus eine Schwenk- oder Drehachse aufweisen, um die ein Schwenken bzw. Drehen möglich ist. Die Schwenk- oder Drehachse kann die Vertikaldrehachse sein. Es kann eine Steuerung für den Schwenkmechanismus vorgesehen sein, die eingerichtet ist, ein Verschwenken oder Verdrehen zu veranlassen oder durchzuführen. Ferner kann der Schwenkmechanismus zumindest einen Aktuator aufweisen, der eine Schwenk- oder Drehbewegung ermöglicht und/oder zur Durchführung einer eine Schwenk- oder Drehbewegung ausgebildet ist. Der Aktuator kann ein Schwenk- oder Drehaktuator sein, beispielsweise ein elektrischer, pneumatischer oder hydraulischer Schwenk- oder Drehaktuator. Der Aktuator kann einen Antrieb, beispielsweise einen elektrischen Motor, einen Schrittmotor oder einen Spindelantrieb, umfassen. Zusätzlich oder alternativ kann der Aktuator ein Drehelement, z.B. eine Drehscheibe, und eine mit diesem gekoppelte Betätigungsstange aufweisen. Hierbei kann der Aktuator ferner eine Zylinder-Kolben-Anordnung oder eine Spindelanordnung umfassen, die ausgebildet ist, eine Bewegung der Betätigungsstange zu bewirken. Zusätzlich oder alternativ kann der Schwenkmechanismus einen Griff zum manuellen Schwenken oder Drehen, z.B. durch einen Bediener, aufweisen.

Ferner kann die Verstelleinrichtung einen Nivelliermechanismus zum Nivellieren der Dosiereinrichtung aufweisen. Der Nivelliermechanismus kann einstellbare Schraubenverbindungen umfassen. Die Schraubverbindungen können jeweils zwei Muttern und eine Gewindestange aufweisen, die beispielsweise derart miteinander wirksam angeordnet sind, dass ein Nivellieren bzw. Anheben und/oder Absenken durchführbar ist. Der Nivelliermechanismus kann manuell, halbautomatisch oder automatisch betätigbar ausgebildet sein, beispielsweise elektrisch, pneumatisch oder hydraulisch. Ferner kann der Nivelliermechanismus eine oder mehrere Achsen, z.B. Hubachsen, aufweisen, entlang derer ein Anheben und/oder Absenken möglich ist. Es kann eine Steuerung für den Nivelliermechanismus vorgesehen sein, die eingerichtet ist, eine Nivellierung und/oder einen Höhenausgleich bzw. ein Anheben und/oder Absenken zu veranlassen oder durchzuführen. Ferner kann der Nivelliermechanismus zumindest einen Aktuator aufweisen, der ein Anheben und/oder Absenken ermöglicht und/oder zur Durchführung einer Hubbewegung ausgebildet ist. Der Aktuator kann ein Hubaktuator und/oder Linearaktuator sein, beispielsweise ein elektrischer, pneumatischer oder hydraulischer Aktuator. Der Aktuator kann einen Antrieb, beispielsweise einen elektrischen Motor, Schrittmotor oder Spindelantrieb, umfassen. Der kann Aktuator ferner eine Zylinder-Kolben-Anordnung oder eine Spindelanordnung umfassen, die ausgebildet ist, eine Hubbewegung und/oder ein Anheben und/oder Absenken zu bewirken. Zusätzlich oder alternativ kann der Nivelliermechanismus einen Griff zum manuellen Anheben und/oder Absenken, z.B. durch einen Bediener, aufweisen. Das zumindest eine Dosiergestell kann eine Trägerplatte aufweisen. Auf der Trägerplatte kann die Dosiereinrichtung anbringbar oder angebracht sein. Die Trägerplatte kann, beispielsweise mittels der Verstelleinrichtung, schwenkbar, drehbar und/oder nivellierbar sein. Dabei kann die Trägerplatte mittels des Schwenkmechanismus um die Vertikaldrehachse verschwenkbar oder verdrehbar und/oder mittels des Nivelliermechanismus nivellierbar sein. Unter Nivellieren kann auch ein Höhenausgleich und/oder ein Anheben und/oder Absenken verstanden werden. Der Nivelliermechanismus kann zum Höhenausgleich und/oder Anheben und/oder Absenken der Trägerplatte und/oder der Dosiereinrichtung dienen und/oder ausgebildet sein. Die Trägerplatte kann ferner zumindest eine Ausnehmung aufweisen, beispielsweise zwei, drei, vier oder mehr Ausnehmungen. Die zumindest eine Ausnehmung kann zum Positionieren der Trägerplatte, insbesondere in einer im Wesentlichen in der Horizontalen verlaufenden Ebene, ausgebildet sein. Beispielsweise kann die zumindest eine Ausnehmung als Durchbruch und/oder Loch, wie Langloch, ausgebildet sein. Die Trägerplatte kann durch die zumindest eine Ausnehmung, insbesondere in der im Wesentlichen in der Horizontalen verlaufenden Ebene, verschiebbar ausgebildet sein. Dadurch lässt sich auch eine auf der Trägerplatte angeordnete Dosiereinrichtung in der im Wesentlichen in der Horizontalen verlaufenden Ebene positionieren und/oder verschieben.

Ein weiterer Aspekt betrifft ein Untergestell auf dem zumindest eine Schneckenmaschine montierbar ist. Das Untergestell kann ein Maschinenuntergestell sein. Zumindest ein Dosiergestell zum Positionieren einer Dosiereinrichtung relativ zum Untergestell und/oder relativ zur zumindest einen Schneckenmaschine kann an dem Untergestell montiert und/oder befestigt sein. Das Untergestell und/oder die zumindest eine Schneckenmaschine und/oder das zumindest eine Dosiergestell und/oder die Dosiereinrichtung kann wie vorstehend und/oder nachfolgend beschrieben ausgebildet sein. Beispielsweise kann das zumindest eine Dosiergestell seitlich am Untergestell montiert und/oder befestigt sein. Ferner kann das zumindest eine Dosiergestell in Längsrichtung des Untergestells und/oder in Längsrichtung der zumindest einen Schneckenmaschine verfahrbar sein, beispielsweise mittels der Linearführung. In einer Variante kann das zumindest eine Dosiergestell ausgebildet sein, die Dosiereinrichtung zu verschwenken und/oder zu nivellieren, beispielsweise mittels der vorstehend und/oder nachfolgend beschriebenen Verstelleinrichtung.

Zusammenfassend und mit anderen Worten dargestellt ergibt sich somit durch die Erfindung unter anderem ein Untergestell mit einem dran montierten Dosiergestell für eine Dosierung, wie Dosiereinrichtung. Das Dosiergestell ist universell einsetzbar und kann direkt an das Untergestell für eine Schneckenmaschine montiert sein. Es kann daher die Fallhöhe zwischen Dosierung, beispielsweise der Förderschnecke der Dosierung, und den Schneckenwellen der Schneckenmaschine reduziert werden. Durch Montage von zwei identischen Dosiergestellen seitlich, z.B. links und rechts, am Untergestell, wie Maschinenuntergestell, kann Bauraum gespart werden. Durch Vorsehen von Linearführungen kann eine universelle Verwendbarkeit und/oder Positionierung ermöglicht werden. So kann beispielsweise die Dosiereinrichtung beim Einlauftrichter der Schneckenmaschine oder beim Einlauftrichter einer Seitenbeschickungsschneckenmaschine, lediglich durch Verschieben und/oder Verschwenken, positioniert sein oder werden. Ferner kann einen Höhenausgleich und/oder Nivellierung der Dosierung vorgesehene sein, beispielsweise über eine separate Platte. Die Dosierung und/oder Platte kann auch drehgelagert an dem Dosiergestell sein, beispielsweise derart, dass ein Wegschwenken ermöglicht werden kann.

Mit der Erfindung wird der Bauraumbedarf signifikant reduziert. Auch kann die Zugänglichkeit zur Schneckenmaschine verbessert werden. Die Fallhöhe zwischen Dosierung und Schneckenmaschine kann deutlich reduziert werden. Es können mehrere, beispielsweise zwei, Dosiergestelle am Untergestell montiert und/oder befestigt werden. Schließlich kann auch die Zugänglichkeit zu allen Bauteilen der Schneckenmaschine verbessert werden, insbesondere durch die Linearführung, da mittels derer eine nicht benötigte Dosierung einfach weggefahren werden kann.

Nachfolgend werden Ausführungsbeispiele der Erfindung unter Bezugnahme auf Figuren näher beschrieben, dabei zeigen schematisch und beispielhaft:
- Fig. 1: eine erste Ansicht eines Dosiergestells zum Positionieren einer Dosiereinrichtung;
- Fig. 2: eine zweite Ansicht des Dosiergestells gemäß Fig. 1;
- Fig. 3: eine perspektivische Ansicht einer Extrusionsvorrichtung mit einem Untergestell und zwei Dosiergestellen gemäß Fig. 1;
- Fig. 4: eine weitere perspektivische Ansicht der Extrusionsvorrichtung gemäß Fig. 2;
- Fig. 5: eine Seitenansicht der Extrusionsvorrichtung gemäß Fig. 2;
- Fig. 6: eine weitere Seitenansicht der Extrusionsvorrichtung gemäß Fig. 2;
- Fig. 7: eine erste Ansicht einer Variante einer Dosiergestells;
- Fig. 8: eine zweite Ansicht des Dosiergestells gemäß Fig. 7;
- Fig. 9: eine Detailansicht der Variante gemäß Fig. 7;
- Fig. 10: eine Detailansicht der Variante gemäß Fig. 7;
- Fig. 11: eine Detailansicht der Variante gemäß Fig. 7;
- Fig. 12: eine erste Ansicht einer Variante mit zwei Dosiergestellen;
- Fig. 13: eine zweite Ansicht der Variante gemäß Fig. 12;
- Fig. 14: eine Detailansicht der Variante gemäß Fig. 12;
- Fig. 15: eine perspektivische Ansicht einer Extrusionsvorrichtung mit einem Untergestell und zwei Dosiergestellen gemäß Fig. 7;
- Fig. 16: eine weitere perspektivische Ansicht der Extrusionsvorrichtung gemäß Fig. 15;
- Fig. 17: eine Seitenansicht der Extrusionsvorrichtung gemäß Fig. 15; und
- Fig. 18: eine weitere Seitenansicht der Extrusionsvorrichtung gemäß Fig. 15;

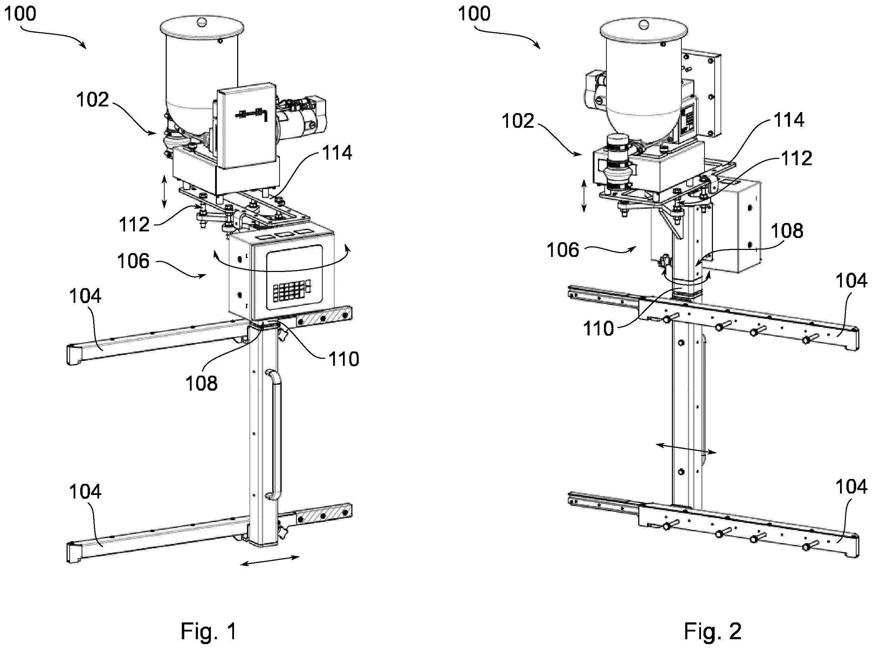

Fign. 1 und 2 zeigen ein Dosiergestell 100 zum Positionieren einer Dosiereinrichtung 102. Die Dosiereinrichtung 102 ist zum Dosieren eines von zumindest einer Schneckenmaschine zu verarbeitenden Materials und/oder Zusatzstoffs ausgebildet. Das Dosiergestell 100 weist eine mehrachsige Linearführung 104 auf. Im vorliegenden Ausführungsbeispiel ist die Linearführung 104 zweiachsig und als Linearauszug 104 ausgebildet. Der Linearauszug 104 weist eine Führungsschiene und eine darin verschiebbar aufgenommene Laufachse auf. Mittels der Linearführung 104 ist das Dosiergestell 100 linear verfahrbar bzw. verschiebbar.

Ferner weist das Dosiergestell 100 eine Verstelleinrichtung 106 auf, die zum Positionieren, insbesondere zum Verschwenken und Einstellen einer Höhe, der Dosiereinrichtung 102 ausgebildet ist. Die Verstelleinrichtung 106 umfasst einen Schwenkmechanismus 108, mittels dessen die Dosiereinrichtung 102 um eine Vertikaldrehachse 110 schwenkbar und/oder verdrehbar ist. Zusätzlich weist die Verstelleinrichtung 106 einen Nivelliermechanismus 112 zum Nivellieren der Dosiereinrichtung 102 auf. Beispielsweise kann der Nivelliermechanismus 112 einstellbare Schraubenverbindungen umfassen. Im vorliegenden Ausführungsbeispiel und wie in Fign. 1 und 2 dargestellt können die Schraubverbindungen jeweils zwei Muttern und eine Gewindestange aufweisen, die derart miteinander wirksam angeordnet sind, dass ein Nivellieren bzw. Anheben und/oder Absenken einer Trägerplatte 114 durchführbar ist.

Wie in Fign. 1 und 2 dargestellt, umfasst das Dosiergestell 100 eine Trägerplatte 114. Auf dieser Trägerplatte 114 ist die Dosiereinrichtung 102 angebracht. Beispielsweise kann die Dosiereinrichtung 102 auf der Trägerplatte mittels Schrauben oder dergleichen befestigt sein. Die Trägerplatte 114 ist mittels der Verstelleinrichtung 106 um die Vertikaldrehachse 110 schwenkbar und/oder verdrehbar und bezogen auf eine Horizontalebene in der Höhe nivellierbar. Das Verschieben, Verschwenken und Nivellieren sind in Fign. 1 und 2 durch die Pfeile veranschaulicht.

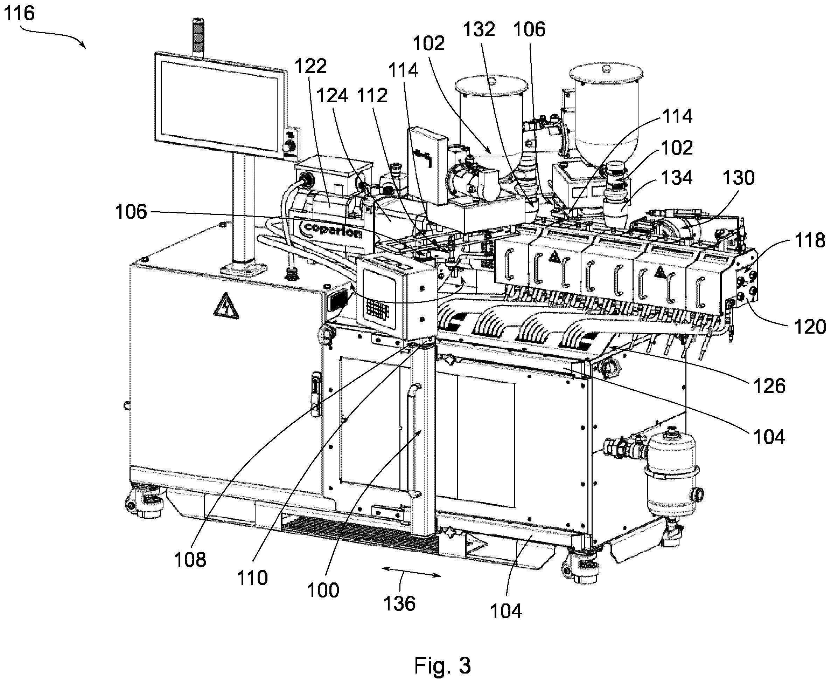

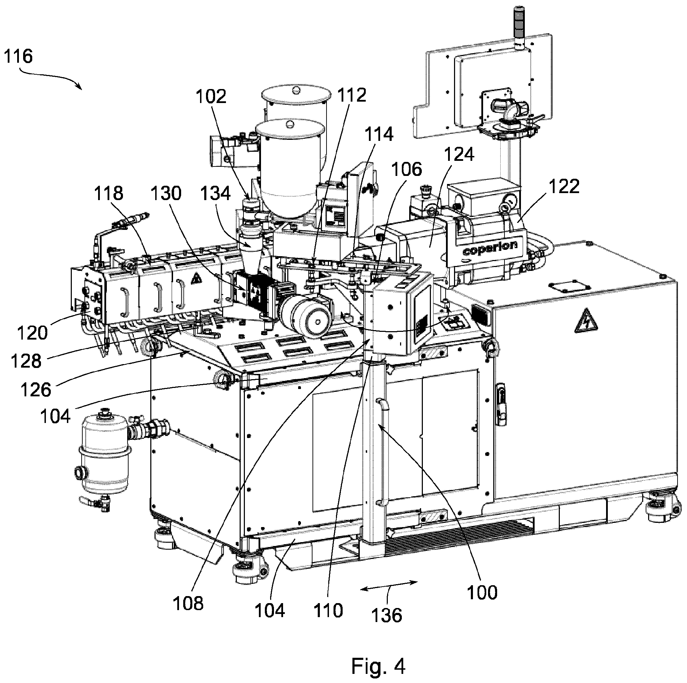

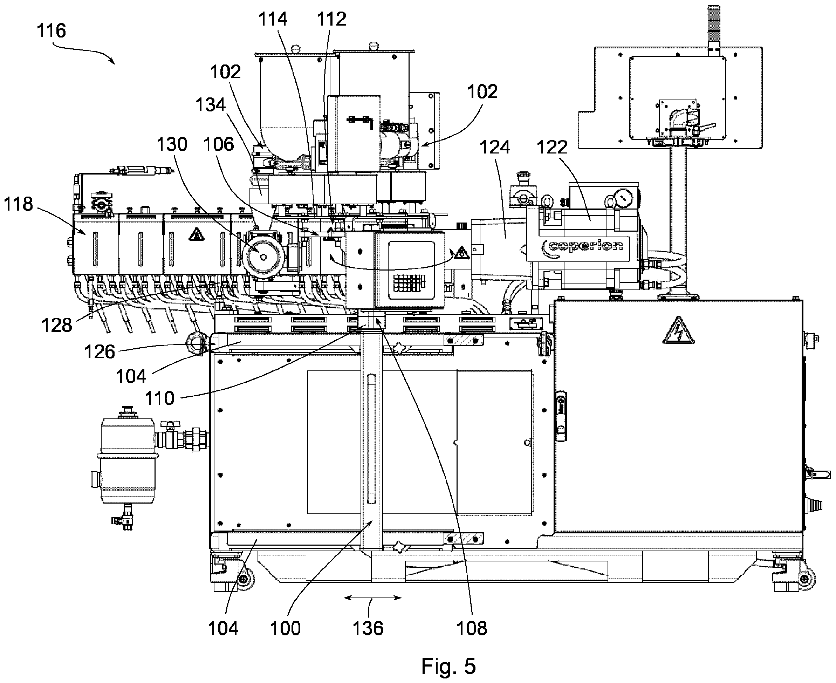

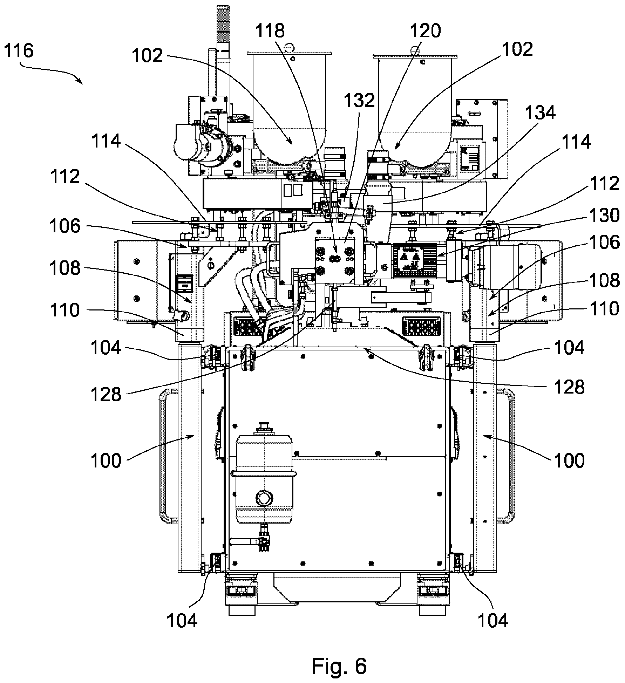

Fign. 3 bis 6 zeigen nun eine Extrusionsvorrichtung 116 in perspektivischer Ansicht (Fign. 3 und 4) und in Seitenansicht (Fign. 5 und 6).

Die in den Fign. 3 bis 6 dargestellte Extrusionsvorrichtung 116 umfasst eine Schneckenmaschine 118 zum Verarbeiten von Material, wie Kunststoffmaterial. Die Schneckenmaschine 118 ist als Zweiwellenschneckenmaschine ausgebildet und weist zwei in einem Zylindergehäuse 120 gelagerte Behandlungselement-Welle zum Plastifizieren und/oder Mischen und/oder Homogenisieren des in die Schneckenmaschine 118 zugeführten Materials auf. Die Behandlungselement-Wellen sind von einem Antriebsmotor 122 über ein Getriebe 124 drehantreibbar.

Die Extrusionsvorrichtung 116 umfasst ferner ein Untergestell 126, wie Maschinenuntergestell. Auf dem Untergestell 126 ist die Schneckenmaschine 118 montiert. Im vorliegenden Ausführungsbeispiel ist die Schneckenmaschine 118 bzw. dessen Zylindergehäuse 120 über Stützen 128 an dem Untergestell 126, insbesondere an der Oberseite des Untergestells 128, abgestützt und daran befestigt. Ferner sind auch der Antriebsmotor 122 und das Getriebe 124 der Schneckenmaschine 118 auf dem Untergestell 126, hier ebenfalls auf der Oberseite des Untergestells 126, montiert und daran befestigt.

Zum Zuführen eines Zusatzstoffes in die Schneckenmaschine 118 ist eine Zuführschneckenmaschine 130 vorgesehen. Hierfür weist die Schneckenmaschine 118 eine Seitenöffnung auf, an der die Zuführschneckenmaschine 130 angeschlossen ist. Dadurch ist die Zuführschneckenmaschine 130 mit der Schneckenmaschine 118 derart verbunden sein, dass der Zusatzstoff in die Schneckenmaschine 118 geführt werden kann. Die Zuführschneckenmaschine 130 ist als Seitenbeschickungsschneckenmaschine ausgebildet und ebenfalls auf dem Untergestell 126, hier auf der Oberseite des Untergestells 126, montiert und daran befestigt.

Wie in Fign. 3 bis 6 dargestellt, weist die Extrusionsvorrichtung 116 zwei Dosiergestelle 100 auf. Die Dosiergestelle 100 sind im Wesentlichen wie vorstehend und/oder nachfolgend beschrieben ausgebildet, beispielsweise so, wie mit Bezug auf Fign. 1 und 2 beschrieben. Es können daher zwei im Wesentlichen identisch ausgebildete Dosiergestelle 100 vorgesehen sein. An jedem Dosiergestell 100 ist eine Dosiereinrichtung 102 zum Dosieren eines von der Schneckenmaschine 118 zu verarbeitenden Materials bzw. Zusatzstoffs angebracht. Bei den Dosiereinrichtungen 102 kann es sich um im Wesentlichen gleiche Dosiereinrichtungen oder um verschieden ausgebildete Dosiereinrichtungen handeln. Beispielsweise kann eine Dosiereinrichtung 102 einem Haupteinfülltrichter 132 der Schneckenmaschine 1 18 zugeordnet und die andere Dosiereinrichtung 102 einem Einlauftrichter 134 der Seitenbeschickungsschneckenmaschine 130 zugeordnet sein. Dadurch kann das zu verarbeitende Material dem Haupteinfülltrichter 132 der Schneckenmaschine 118 und der Zusatzstoff dem Einfülltrichter 134 der Seitenbeschickungsschneckenmaschine 130 dosiert zugeführt werden.

In dem vorliegenden Ausführungsbeispiel sind die Dosiergestelle 100 an dem Untergestell 126 montiert. Wie in Fign. 3 bis 6 zu erkennen ist, sind die Dosiergestelle 100 seitlich am Untergestell 126 montiert bzw. über die Linearführungen 104 an zwei gegenüberliegenden Seiten des Untergestells 126 seitlich an dem Untergestell 126 befestigt und in Längsrichtung 136 des Untergestells 126 verfahrbar. Dadurch können die Dosiergestelle 100 und damit die jeweilige Dosiereinrichtung 102 in Längsrichtung 136 der Schneckenmaschine 118, insbesondere in Längsrichtung 136 des Zylindergehäuses 120, und in Längsrichtung 136 des Untergestells 126 linear verfahren bzw. verschoben werden. Die Dosiergestelle 100 sind somit zum Positionieren der jeweiligen Dosiereinrichtung 102 relativ zum Untergestell 126 und relativ zur Schneckenmaschine 118 bzw. Seitenbeschickungsschneckenmaschine 130 ausgebildet.

Die Dosiergestelle 100 umfassen jeweils die Verstelleinrichtung 106 zum Positionieren, insbesondere Verschwenken und Einstellen einer Höhe, der jeweiligen Dosiereinrichtung 102 relativ zur Schneckenmaschine 118 bzw. Seitenbeschickungsschneckenmaschine 130. Mittels des Schwenkmechanismus 108 der Verstelleinrichtung 106 kann die jeweilige Dosiereinrichtung 102 um die Vertikaldrehachse 110 in eine Dosierposition geschwenkt werden (in Fign. 3, 4 und 5 durch den Pfeil veranschaulicht), in der die Dosiereinrichtung 102 mit dem Haupteinfülltrichter 132 der Schneckenmaschine 118 bzw. mit dem Einlauftrichter 134 der Seitenbeschickungsschneckenmaschine 130 zum dosierten Zuführen des Materials bzw. Zusatzstoffs verbunden ist. Mit Hilfe des Nivelliermechanismus 112 der Verstelleinrichtung 106 kann dann die auf der Trägerplatte 114 angeordnete Dosiereinrichtung 102 nivelliert werden, um einen Höhenausgleich zu ermöglichen. So kann die jeweilige Dosiereinrichtung 102 beim Haupteinfülltrichter 132 der Schneckenmaschine 118 bzw. beim Einlauftrichter 134 der Seitenbeschickungsschneckenmaschine 130 lediglich durch Verschieben und Verschwenken exakt und einfach positioniert werden. Vorteilhaft ist, dass durch den Schwenkmechanismus 108 der Verstelleinrichtung 106 die jeweilige Dosiereinrichtung 102 auch in eine Reinigungsposition oder Parkposition von der Schneckenmaschine 118 bzw. Seitenbeschickungsschneckenmaschine 130 weggeschwenkt werden kann. Zusätzlich oder alternativ hierzu kann auch die Linearführung 104 dienen, die ausgebildet sein kann, die Dosiereinrichtung 102 in eine Reinigungsposition oder Parkposition von der Schneckenmaschine 118 oder von der Seitenbeschickungsschneckenmaschine 130 wegzufahren bzw. wegzuschieben. Die Dosiergestelle 100 ermöglichen somit eine universelle Verwendbarkeit und Positionierung der Dosiereinrichtungen 102.

Im Übrigen wird ergänzend insbesondere auf Fign. 1 und 2 und die zugehörige Beschreibung verwiesen.

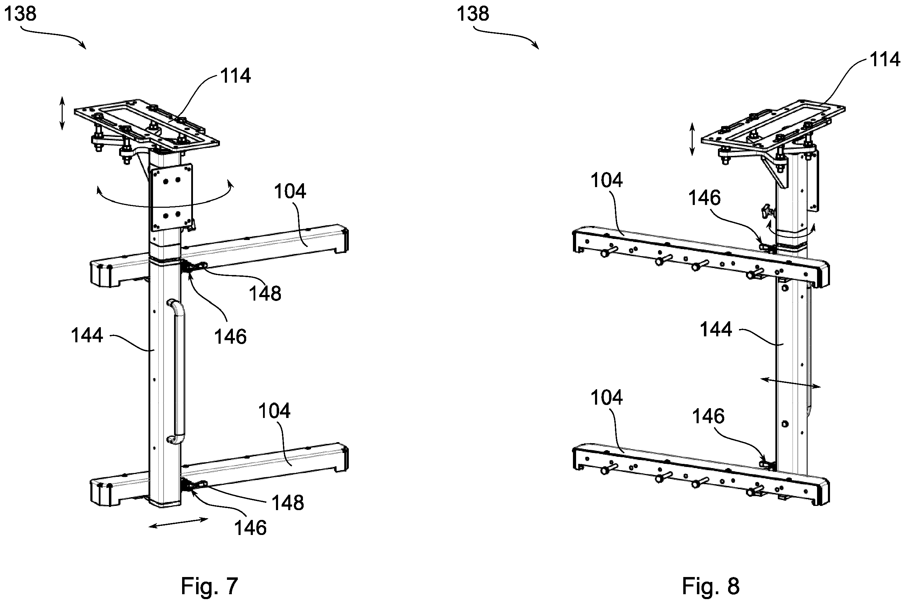

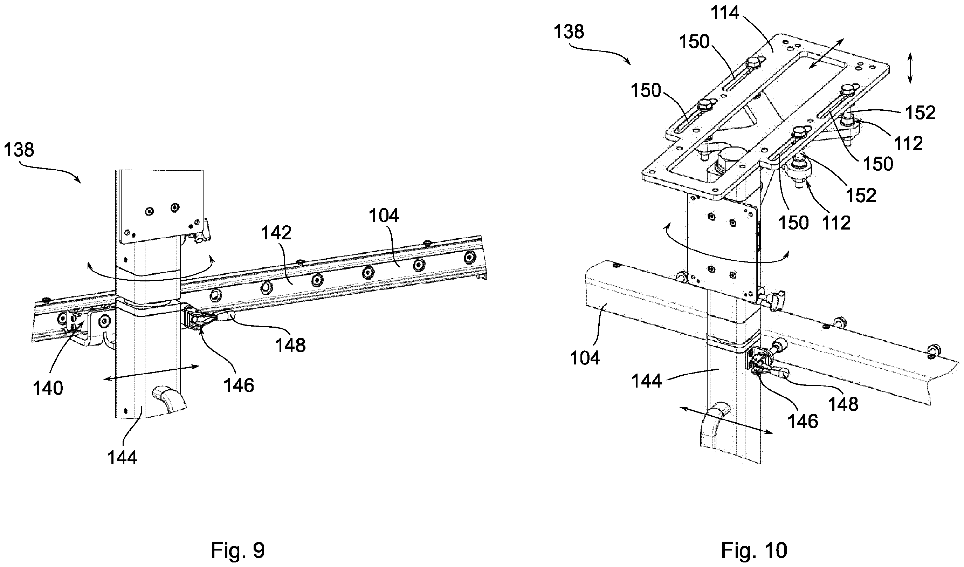

Fign. 7 bis 11 zeigen eine Variante eines Dosiergestells 138. Im Gegensatz zu dem Dosiergestell 100 gemäß Fign. 1 und 2, weist die Linearführung 104 des Dosiergestells 138 gemäß der vorliegenden Ausführungsform nach Fign. 7 bis 11 anstatt der Laufachsen Läufer 140 auf, die in der jeweiligen Führungsschiene 142 verschiebbar aufgenommen sind (in Fig. 9 bis 11 im Detail dargestellt). Die beiden voneinander vertikal beabstandeten Führungsschienen 142 sind an dem Untergestell 126 befestigbar und die Läufer 140 sind an einer Vertikalachse 144 des Dosiergestells 138 befestigt. Ferner sind die Läufer 140 mit den Führungsschienen 142 derart gekoppelt, dass die Läufer 140 in ihrer jeweiligen Führungsschiene 142 entlang und im Wesentlichen innerhalb der Führungsschiene 142 verschiebbar sind. Dadurch kann die Vertikalachse 144 des Dosiergestells 138 entlang der Führungsschiene 142 linear verschoben werden.

Ferner ist die Linearführung feststellbar bzw. arretierbar. Im vorliegenden Ausführungsbeispiel sind die Läufer 140 feststellbar bzw. arretierbar. Hierzu ist für jeden Läufer 140 eine als Kniehebelmechanismus ausgebildete Befestigungseinrichtung 146 vorgesehen. Die Befestigungseinrichtung 146 ist ausgebildet, den jeweiligen Läufer 140 an der zugehörigen Führungsschiene 142 festzustellen bzw. zu arretieren. Hierfür genügt beispielsweise die manuelle Betätigung eines Hebels 148, wie Betätigungshebel, der Befestigungseinrichtung 146. Ein Verschieben des Dosiergestells 138 ist dann nicht mehr möglich. Erst nach erneuter Betätigung des Hebels 148 bzw. Freigabe kann wieder ein Verschieben erfolgen.

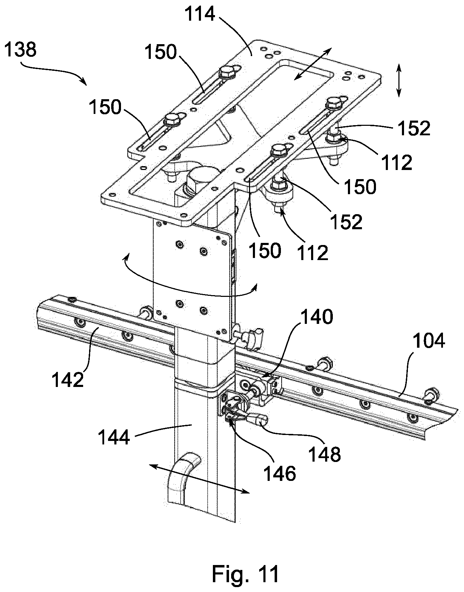

Die Trägerplatte 114 des Dosiergestells 138 weist ferner Ausnehmungen 150, hier vier Ausnehmungen 150, auf. Die Ausnehmungen 150 sind zum Positionieren und/oder Verschieben der Trägerplatte 114 in einer im Wesentlichen in der Horizontalen verlaufenden Ebene ausgebildet. Im vorliegenden Ausführungsbeispiel sind die Ausnehmungen 15 als Langloch ausgebildet. Wie in Fig. 10 und 11 gezeigt ragen die Gewindestangen 152 der Schraubverbindungen des Nivelliermechanismus 112 durch die Ausnehmungen 150 hindurch und sind mittels Muttern an der Trägerplatte 114 befestigbar, aber auch wieder so lösbar, dass die Gewindestangen 152 innerhalb der Ausnehmungen 150 gleiten können. Dadurch lässt sich auch eine auf der Trägerplatte 114 angeordnete Dosiereinrichtung 102 in der im Wesentlichen in der Horizontalen verlaufenden Ebene positionieren und/oder verschieben.

Im Übrigen wird ergänzend insbesondere auf Fign. 1 bis 6 und die zugehörige Beschreibung verwiesen.

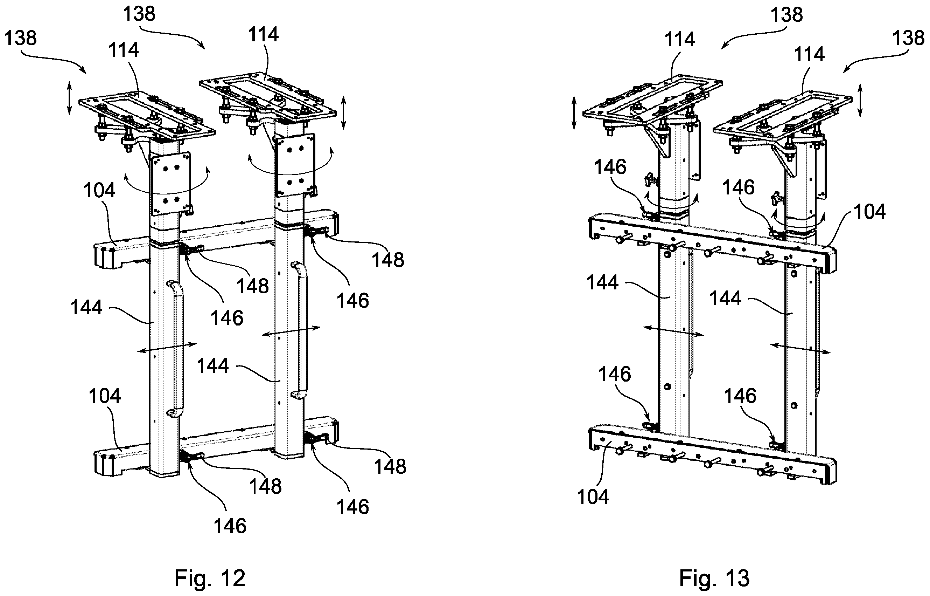

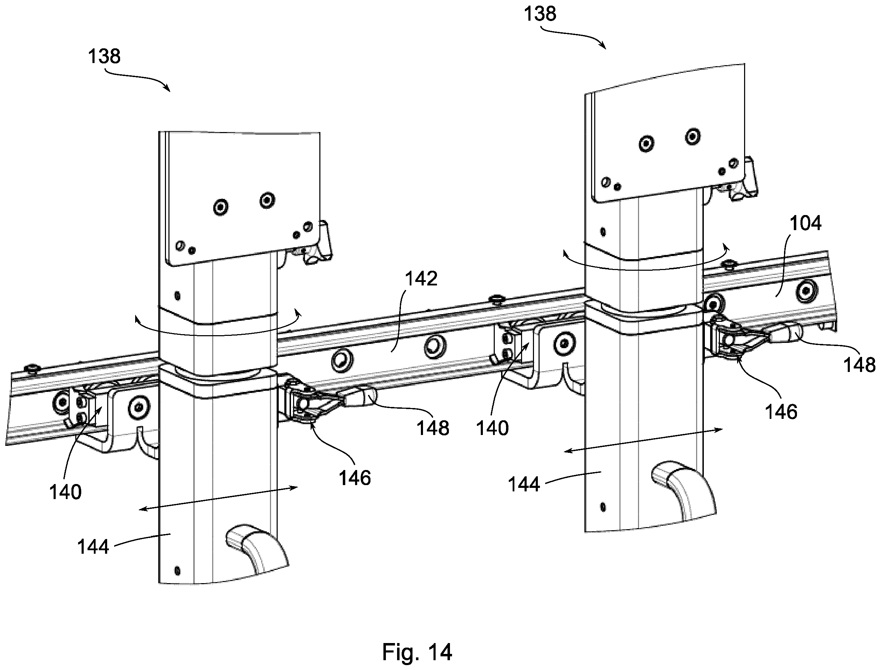

Fign. 12 bis 14 zeigen eine Variante mit zwei Dosiergestellen 138 an einer gemeinsamen Linearführung 104. Hierfür sind jeweils zwei Läufer 140 mit einer Führungsschiene 142 gekoppelt, insbesondere so, dass die zwei Läufer 140 entlang und im Wesentlichen innerhalb einer gemeinsamen Führungsschiene 142 jeweils einzeln und/oder zusammen verschiebbar sind. Im vorliegenden Ausführungsbeispiel sind somit an jeder Führungsschiene 142 zwei Läufer 140 verschiebbar aufgenommen. Ferner sind die Läufer 140 einer Führungsschiene 142 jeweils an einer Vertikalachse 144 des zugeordneten Dosiergestells 138 befestigt. Es können so die beiden Dosiergestelle 138 mittels der gemeinsamen Linearführung 104 entlang der gemeinsamen Führungsschienen 142 linear verfahren werden, beispielsweise individuell, gleichzeitig, relativ zueinander und/oder zusammen.

Im Übrigen wird ergänzend insbesondere auf Fign. 1 bis 11 und die zugehörige Beschreibung verwiesen.

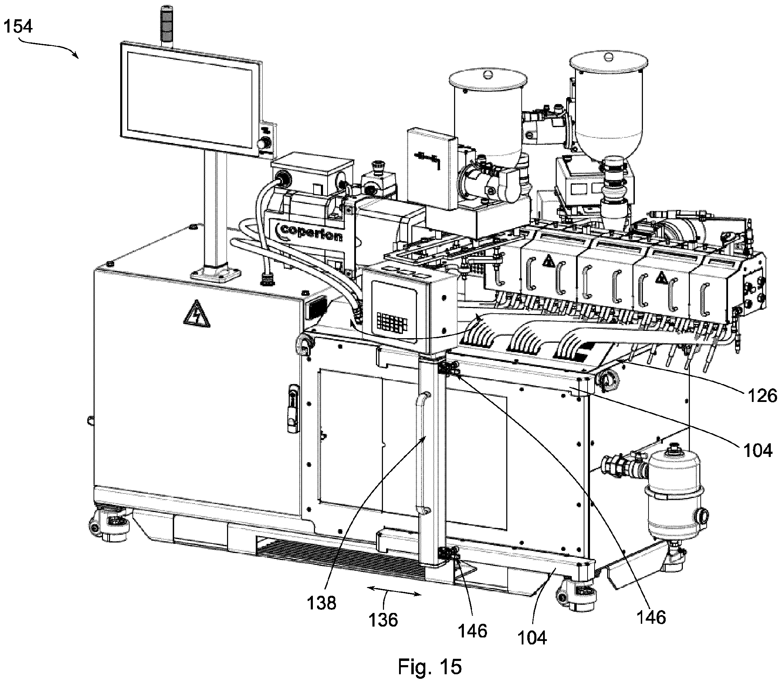

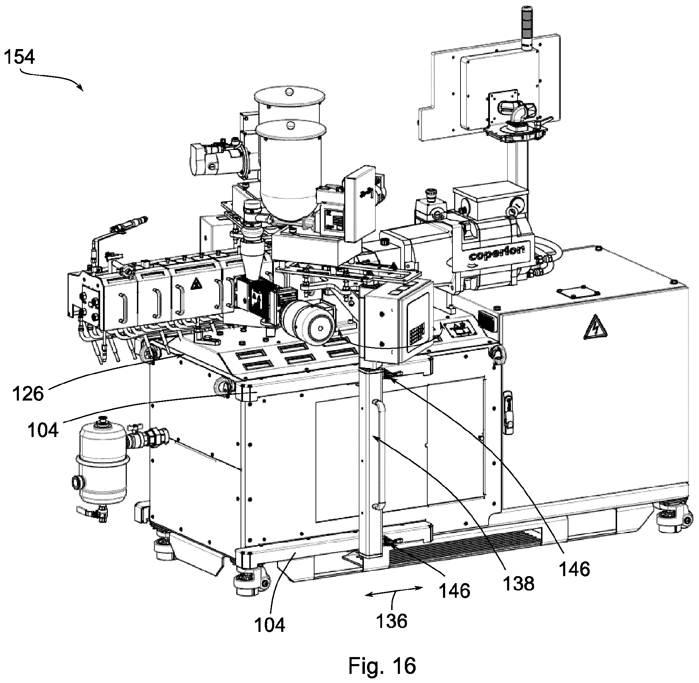

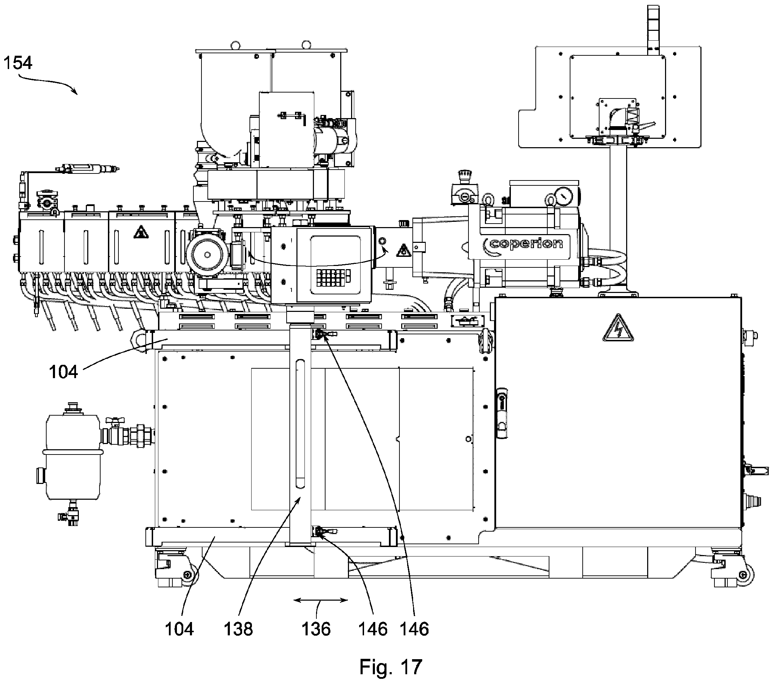

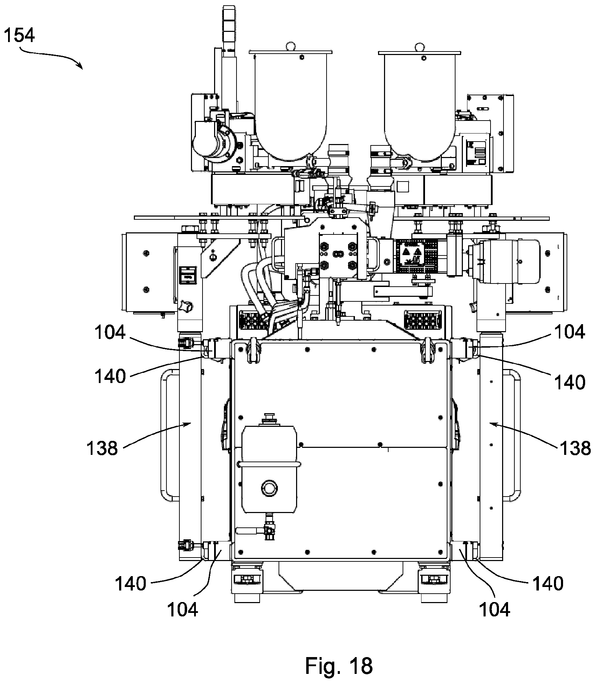

Fign. 15 bis 18 zeigen eine Variante eine Extrusionsvorrichtung 154 in perspektivischer Ansicht (Fign. 15 und 16) und in Seitenansicht (Fign. 17 und 15).

Die Extrusionsvorrichtung 154 gemäß dem vorliegendem Ausführungsbeispiel entspricht im Wesentlichen der mit Bezug auf Fign. 3 bis 6 beschriebenen und dort dargestellten Extrusionsvorrichtung 116. Wie in Fign. 15 bis 18 gezeigt, weist die Extrusionsvorrichtung 154 nun anstatt der Dosiergestelle 100 zwei Dosiergestelle 138 auf, welche dem in Fign. 7 bis 11 dargestellten und beschriebenen Dosiergestell 138 entsprechen. Die Dosiergestelle 138 der Extrusionsvorrichtung 154 sind somit im Wesentlichen wie vorstehend mit Bezug auf Fign. 7 bis 11 beschrieben ausgebildet.

Die Dosiergestelle 138 sind ebenfalls seitlich am Untergestell 126 montiert bzw. über die Linearführungen 104 an zwei gegenüberliegenden Seiten des Untergestells 126 seitlich an dem Untergestell 126 befestigt und in Längsrichtung 136 des Untergestells 126 verfahrbar. Im Unterscheid weisen die Linearführungen 104 jedoch die Läufer 140 auf, die in der jeweiligen Führungsschiene 142 verschiebbar aufgenommen sind. Ferner ist für jeden Läufer 140 die als Kniehebelmechanismus ausgebildete Befestigungseinrichtung 146 vorgesehen, um die Läufer 140 feststellen bzw. arretieren zu können.

Im Übrigen wird ergänzend insbesondere auf Fign. 1 bis 14 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Dosiergestell
- 102: Dosiereinrichtung
- 104: Linearführung
- 106: Verstelleinrichtung
- 108: Schwenkmechanismus
- 110: Vertikaldrehachse
- 112: Nivelliermechanismus
- 114: Trägerplatte
- 116: Extrusionsvorrichtung
- 118: Schneckenmaschine
- 120: Zylindergehäuse
- 122: Antriebsmotor
- 124: Getriebe
- 126: Untergestell
- 128: Stützen
- 130: Zuführschneckenmaschine
- 132: Haupteinfülltrichter
- 134: Einlauftrichter
- 136: Längsrichtung
- 138: Dosiergestell
- 140: Läufer
- 142: Führungsschiene
- 144: Vertikalachse
- 146: Befestigungseinrichtung / Kniehebelmechanismus
- 148: Betätigungshebel
- 150: Ausnehmungen
- 152: Gewindestangen
- 154: Extrusionsvorrichtung

## Patentansprüche

1. Extrusionsvorrichtung (116, 154) mit zumindest einer Schneckenmaschine (118, 130) zum Verarbeiten von Material, insbesondere Kunststoffmaterial, einem Untergestell (126) auf dem die zumindest eine Schneckenmaschine (118, 130) montiert ist und zumindest einem Dosiergestell (100, 138) zum Positionieren einer Dosiereinrichtung (102) relativ zur zumindest einen Schneckenmaschine (118, 130), wobei das zumindest eine Dosiergestell (100, 138) an dem Untergestell (126) montiert ist.

2. Extrusionsvorrichtung (116, 154) nach Anspruch 1, **dadurch gekennzeichnet, dass** das zumindest eine Dosiergestell (100, 138) seitlich am Untergestell (126) montiert ist.

3. Extrusionsvorrichtung (116, 154) nach wenigstens einem der vorhergehenden Ansprüche, **dadurch gekennzeichnet, dass** zwei Dosiergestelle (100, 138) vorgesehen sind, die insbesondere an gegenüberliegenden Seiten des Untergestells (126) montiert sind.

4. Extrusionsvorrichtung (116, 154) nach Anspruch 3, **dadurch gekennzeichnet, dass** die beiden Dosiergestelle (100, 138) im Wesentlichen identisch ausgebildet sind.

5. Extrusionsvorrichtung (116, 154) nach wenigstens einem der vorhergehenden Ansprüche, **dadurch gekennzeichnet, dass** das zumindest eine Dosiergestell (100, 138) in Längsrichtung (136) oder Querrichtung der zumindest einen Schneckenmaschine (118, 130) und/oder in Längsrichtung (136) des Untergestells (126) verfahrbar ist.

6. Extrusionsvorrichtung (116, 154) nach wenigstens einem der vorhergehenden Ansprüche, **dadurch gekennzeichnet, dass** zumindest eine ein- oder mehrachsige Linearführung (104) vorgesehen ist, mittels der das zumindest eine Dosiergestell (100, 138) an dem Untergestell (126) angeordnet und/oder verfahrbar ist.

7. Extrusionsvorrichtung (116, 154) nach wenigstens einem der vorhergehenden Ansprüche, **dadurch gekennzeichnet, dass** das zumindest eine Dosiergestell (100, 138) eine Verstelleinrichtung (106) zum Positionieren, insbesondere Verschwenken und/oder Einstellen einer Höhe, der Dosiereinrichtung (102) relativ zur zumindest einen Schneckenmaschine (118, 130) aufweist.

8. Extrusionsvorrichtung (116, 154) nach Anspruch 7, **dadurch gekennzeichnet, dass** die Verstelleinrichtung (106) einen Schwenkmechanismus (108) aufweist, mittels dessen die Dosiereinrichtung (102) um eine Vertikaldrehachse (110), insbesondere in eine Dosierposition, schwenkbar und/oder verdrehbar ist.

9. Extrusionsvorrichtung (116, 154) nach Anspruch 7 oder 8, **dadurch gekennzeichnet, dass** die Verstelleinrichtung (106) einen Nivelliermechanismus (112) zum Nivellieren der Dosiereinrichtung (102) aufweist.

10. Extrusionsvorrichtung (116, 154) nach wenigstens einem der vorhergehenden Ansprüche, **dadurch gekennzeichnet, dass** das zumindest eine Dosiergestell (100, 138) eine Trägerplatte (114) aufweist, auf der die Dosiereinrichtung (102) anbringbar oder angebracht ist.

11. Extrusionsvorrichtung (116, 154) nach Anspruch 10, **dadurch gekennzeichnet, dass** die Trägerplatte (114), insbesondere mittels der Verstelleinrichtung (106), schwenkbar, verdrehbar und/oder nivellierbar ist.

12. Extrusionsvorrichtung (116, 154) nach Anspruch 10 oder 11, **dadurch gekennzeichnet, dass** die Trägerplatte (114) zumindest eine Ausnehmung (150) aufweist, die zum Positionieren der Trägerplatte (114) in einer im Wesentlichen in der Horizontalen verlaufenden Ebene ausgebildet ist.

13. Extrusionsvorrichtung (116, 154) nach wenigstens einem der vorhergehenden Ansprüche, **dadurch gekennzeichnet, dass** die Extrusionsvorrichtung (116, 154) zumindest eine Dosiereinrichtung (102) zum Dosieren eines von der zumindest einen Schneckenmaschine (118, 130) zu verarbeitenden Materials und/oder Zusatzstoffs aufweist, wobei die zumindest eine Dosiereinrichtung (102) an dem zumindest einen Dosiergestell (100, 138) angebracht ist.

14. Untergestell (126) auf dem zumindest eine Schneckenmaschine (118, 130) montierbar ist, wobei zumindest ein Dosiergestell (100, 138) zum Positionieren einer Dosiereinrichtung (102) relativ zum Untergestell (126) und/oder relativ zur zumindest einen Schneckenmaschine (118, 130) an dem Untergestell (126) montiert ist.

15. Untergestell (126) nach Anspruch 14, **dadurch gekennzeichnet, dass** das zumindest eine Dosiergestell (100, 138) seitlich am Untergestell (126) montiert und/oder in Längsrichtung (136) des Untergestells (126) verfahrbar ist.
